(19) Europäisches Patentamt
European Patent Office
Office européen des brevets

(11) **EP 4 032 795 A1**

(12) **EUROPÄISCHE PATENTANMELDUNG**

(43) Veröffentlichungstag:
**27.07.2022 Patentblatt 2022/30**

(21) Anmeldenummer: **21153470.6**

(22) Anmeldetag: **26.01.2021**

(51) Internationale Patentklassifikation (IPC):
**B62M 6/45** *(2010.01)* **B62M 6/55** *(2010.01)*

(52) Gemeinsame Patentklassifikation (CPC):
**B62M 6/45; B62M 6/55**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Amprio GmbH**
**41460 Neuss (DE)**

(72) Erfinder:
• **EFKEN, Marc**
**41460 Neuss (DE)**
• **MISGELD, Berno Johannes Engelbert**
**41460 Neuss (DE)**

(74) Vertreter: **terpatent Patentanwälte ter Smitten Eberlein-Van Hoof Rütten Daubert Partnerschaftsgesellschaft mbB Burgunderstraße 29 40549 Düsseldorf (DE)**

(54) **ERKENNUNG EINER SENSORMANIPULATION EINES ELEKTROFAHRRADS**

(57) Die Erfindung betrifft ein Elektrofahrrad mit einem Vorderrad (24), einem Hinterrad (22), einem elektrischen Traktionsmotor (30), welcher das Vorderrad (24) oder das Hinterrad (22) antreibt, einem Traktionsakkumulator (34) zur Versorgung des Traktionsmotors (30) mit elektrischer Energie, einem Elektrofahrrad-Geschwindigkeits-Sensor (82) zur Ermittlung der aktuellen Elektrofahrrad-Geschwindigkeit, einer Elektrofahrrad-Steuerung (50) zur Ansteuerung des Traktionsmotors (30), wobei die Elektrofahrrad-Steuerung (50) den Traktionsmotor (30) bei einer maximalen Elektrofahrrad-Geschwindigkeit abregelt, und einer Manipulationserkennungs-Einheit (54) zur Erkennung einer Manipulation eines Elektrofahrrad-Geschwindigkeits-Signals des Elektrofahrrad-Geschwindigkeits-Sensor (82), wobei die Manipulationserkennungs-Einheit (54) eine durch den Traktionsmotor (30) und/oder durch einen Fahrer erzeugte Ist-Gesamtantriebsleistung mit einer aus der Elektrofahrrad-Geschwindigkeit berechnete Soll-Antriebsleistung abgleicht und bei einer Abweichung der Soll-Antriebsleistung von der Ist-Gesamtantriebsleistung eine Manipulation des Elektrofahrrad-Geschwindigkeits-Signals feststellt.

Fig.1

EP 4 032 795 A1

**Beschreibung**

Die Erfindung betrifft ein Elektrofahrrad mit einem elektrischen Traktionsmotor, welcher zumindest ein Vorderrad oder ein Hinterrad antreibt, einem Traktionsakkumulator zur Versorgung des Traktionsmotors mit elektrischer Energie, einem Elektrofahrrad-Geschwindigkeits-Sensor zur Ermittlung der aktuellen Elektrofahrrad-Geschwindigkeit und einer Elektrofahrrad-Steuerung zur Ansteuerung des Traktionsmotors.

Derartige Elektrofahrräder können grundsätzlich als E-Bikes oder als Pedelecs ausgeführt sein. Dabei wird unter einem Pedelec vorliegend ein Fahrrad verstanden, welches mit einem ausschließlich unterstützend arbeitenden elektrischen Traktionsmotor ausgestattet ist. Der Traktionsmotor kann beispielsweise als Nabenantrieb, als Kettenantrieb oder als Tretwellen-Antrieb ausgebildet sein. Das Pedelec weist ferner einen Traktionsakkumulator zur Versorgung des Traktionsmotors mit elektrischer Antriebsenergie auf. Zur elektrischen Steuerung des Pedelecs und insbesondere des Traktionsmotors weist das Pedelec eine Elektrofahrrad-Steuerung auf, die die elektrische Antriebsenergie für den Traktionsmotor in Abhängigkeit von einer Unterstützungsfunktion steuert. Unter einer Unterstützungsfunktion ist eine starre, eine lineare, eine nicht-lineare Funktion oder mathematische Operation zu verstehen, die das Verhältnis zwischen einem momentanen Fahrer-Drehmoment, welches durch den Fahrer muskulär in die Tretwelle eingebracht wird, und der unterstützenden Motorleistung durch den Traktionsmotor definiert. Bei bekannten Pedelecs ist in der Elektrofahrrad-Steuerung eine Standard-Unterstützungsfunktion eingerichtet, mit der die Motorsteuerung in Abhängigkeit von dem Fahrer-Drehmoment eine entsprechende elektrische Antriebsenergie ermittelt und dem Antriebsmotor zuleitet. Die Standard-Unterstützungsfunktion kann gegebenenfalls über eine Bedieneinheit zwischen einer maximalen Unterstützung und einer minimalen Unterstützung graduell und schrittweise durch den Fahrer eingestellt werden.

Anderenfalls wird unter einem E-Bike vorliegend ein Fahrrad verstanden, bei welchem der Traktionsmotor nicht nur unterstützend betrieben wird, sondern das Elektrofahrrad auch ausschließlich durch die elektrische Antriebsleistung, d.h. ausschließlich durch den Traktionsmotor und ohne Berücksichtigung des Fahrer-Drehmoments, angetrieben werden kann. Dadurch wird ein Fahren mit dem Elektrofahrrad auch ohne ein in die Tretwelle eingebrachtes Fahrer- Drehmoments und neben einer bei Pedelecs bereits existierenden Anfahrhilfe, welche lediglich bis zu einer Geschwindigkeit von 6 km/h funktioniert, ermöglicht.

Die unterstützende Funktion des Traktionsmotors ist bei Pedelecs auf eine gesetzlich vorgeschriebene maximale Elektrofahrrad-Geschwindigkeit begrenzt. Bei Pedelecs, welche ohne einen Führerschein gefahren werden dürfen, ist beispielsweise eine Unterstützung durch den Traktionsmotor bis zu einer maximalen Elektrofahrrad-Geschwindigkeit von 25 km/h zulässig. Bei einem Überschreiten dieser maximalen Elektrofahrrad-Geschwindigkeit wird der Traktionsmotor abgeschaltet. Bei sogenannten Speed-Pedelecs, welche ausschließlich mit einem Führerschein gefahren werden dürfen, erfolgt die Abschaltung bei einer Geschwindigkeit von 45 km/h. Auch der Betrieb von E-Bikes ist üblicherweise auf eine maximale Elektrofahrrad-Geschwindigkeit begrenzt.

Im Betrieb des Elektrofahrrades wird die Elektrofahrrad-Geschwindigkeit mittels eines Elektrofahrrad-Geschwindigkeits-Sensors dauerhaft gemessen und überwacht, wobei der Traktionsmotor basierend auf der durch den Elektrofahrrad-Geschwindigkeits-Sensor gemessenen Elektrofahrrad-Geschwindigkeit bei der gesetzlich vorgeschriebenen maximalen Elektrofahrrad-Geschwindigkeit abgeschaltet wird. Um eine derartige Abschaltung des Traktionsmotors bei der maximalen Elektrofahrrad-Geschwindigkeit zu unterbinden, wird das Geschwindigkeits-Signal des Elektrofahrrad-Geschwindigkeits-Sensors gesetzeswidrig manipuliert. Dabei erhält die Elektrofahrrad-Steuerung bei einer tatsächlichen Elektrofahrrad-Geschwindigkeit von 25 km/h ein manipuliertes Geschwindigkeits-Signal, welches einer reduzierten Elektrofahrrad-Geschwindigkeit, beispielsweise einer halbierten Geschwindigkeit von 12,5 km/h, entspricht. Dadurch erfolgt eine Abschaltung des Traktionsmotors nicht bei der vorgegebenen maximalen Elektrofahrrad-Geschwindigkeit, sondern erst bei einer höheren Elektrofahrrad-Geschwindigkeit.

Die DE 10 2014 212 760 A1 offenbart ein Elektrofahrrad mit einer Vorrichtung zur Plausibilisierung von Geschwindigkeitsdaten, wobei durch die Plausibilisierung der Geschwindigkeitsdaten eine Manipulation des Geschwindigkeits-Signals eines Elektrofahrrad-Geschwindigkeits-Sensors erkannt werden soll. Hierbei weist das Elektrofahrrad einen zweiten Sensor auf, aus dessen Signal ebenfalls auf die Elektrofahrrad-Geschwindigkeit geschlossen wird. Die beiden durch den Elektrofahrrad-Geschwindigkeits-Sensor und den zweiten Sensor erfassten Geschwindigkeiten werden miteinander verglichen und bei einer Abweichung eine Manipulation des Geschwindigkeits-Signals des Elektrofahrrad-Geschwindigkeitssensors, welches der Abschaltung des Traktionsmotors dient, detektiert. Eine derartige Ausführung einer Manipulationserkennung ist aufwendig und kostenintensiv, da ein zusätzlicher Sensor vorgesehen werden muss, um die Manipulation zu erkennen. Anderenfalls kann gemäß DE 10 2014 212 760 A1 auch die Motordrehzahl des Traktionsmotors oder die Trittfrequenz des Fahrers genutzt werden, um die Geschwindigkeitsdaten des Elektrofahrrad-Geschwindigkeitssensors zu plausibilisieren. Hierbei wird aus der Motordrehzahl oder der Trittfrequenz des Fahrers die Elektrofahrrad-Geschwindigkeit berechnet. Bei der Berechnung muss die Getriebeübersetzung bzw. die Gangschaltung zum Hinterrad und der Raddurchmesser bei der Berechnung der Geschwindigkeit berücksichtigt werden. Eine derartige Berücksichtigung der Getriebeübersetzung bzw. der Gangschaltung ist aufwendig, wodurch auch die Manipulationserkennung aufwendig und kostenintensiv ist.

Die Aufgabe der Erfindung ist vor diesem Hintergrund, ein Elektrofahrrad mit einer einfachen und zuverlässigen Manipulationserkennung des Geschwindigkeits-Signals eines Elektrofahrrad-Geschwindigkeits-Sensors bereitzustellen.

Diese Aufgabe wird durch ein Elektrofahrrad mit den Merkmalen des Hauptanspruchs gelöst.

Das erfindungsgemäße Elektrofahrrad weist ein Vorderrad, ein Hinterrad, einen elektrischen Traktionsmotor, welche das Vorderrad oder das Hinterrad antreibt, einem Traktionsakkumulator zur Versorgung des Traktionsmotors mit elektrischer Energie, einen Elektrofahrrad-Geschwindigkeits-Sensor zur Ermittlung der aktuellen Elektrofahrrad-Geschwindigkeit und eine Elektrofahrrad-Steuerung zur Ansteuerung des Traktionsmotors auf. Im Betrieb des Elektrofahrrades, welches insbesondere als ein sogenanntes Pedelec ausgeführt ist und dadurch lediglich bei einem Tretvorgang eines Fahrers, d.h. bei einem vorliegenden, in die Tretwelle eingebrachten Fahrer-Drehmoment, unterstützend arbeitet, wird der elektrische Traktionsmotor mittels einer Elektrofahrrad-Steuerung angesteuert. Die Elektrofahrrad-Steuerung dient außerdem der Abregelung des Traktionsmotors bei Erreichen einer maximalen Elektrofahrrad-Geschwindigkeit. Die maximale Elektrofahrrad-Geschwindigkeit ist eine im Regelfall gesetzlich vorgeschriebene maximale Geschwindigkeit, welche je nach Art des Elektrofahrrades variiert. Bei einem Pedelec, welches ohne Führerschein gefahren werden darf, ist die maximale Elektrofahrrad-Geschwindigkeit mit 25km/h definiert.

Im Betrieb des Elektrofahrrades wird die Elektrofahrrad-Geschwindigkeit mittels eines Elektrofahrrad-Geschwindigkeits-Sensors dauerhaft oder in regelmäßigen Zeitabständen überwacht und der Traktionsmotor ab der gesetzlich vorgeschriebenen maximalen Elektrofahrrad-Geschwindigkeit abgeregelt. Um die Abregelung des Traktionsmotors bei der maximalen Elektrofahrrad-Geschwindigkeit zu verhindern, wird gesetzeswidrig das Geschwindigkeits-Signal des Elektrofahrrad-Geschwindigkeits-Sensors manipuliert, wodurch die Elektrofahrrad-Steuerung bei einer tatsächlichen Elektrofahrrad-Geschwindigkeit von 25 km/h ein Geschwindigkeits-Signal erhält, welches einer reduzierte Elektrofahrrad-Geschwindigkeit, beispielsweise einer halbierten Geschwindigkeit von 12,5 km/h, entspricht. Dadurch erfolgt eine Abregelung des Traktionsmotors nicht bei der tatsächlichen maximalen Elektrofahrrad-Geschwindigkeit, sondern erst bei einer höheren Elektrofahrrad-Geschwindigkeit. Unter Abregeln des Traktionsmotors ist eine Abschaltung des Traktionsmotors oder eine Drosselung der Antriebsleistung des Traktionsmotors zu verstehen.

Um eine derartige Manipulation des Elektrofahrrad-Geschwindigkeits-Signals des Elektrofahrrad-Geschwindigkeits-Sensors zu erkennen, weist das Elektrofahrrad eine Manipulationserkennungs-Einheit auf. Erfindungsgemäß führt die Manipulationserkennungs-Einheit einen Abgleich zwischen einer durch den Traktionsmotor und/oder durch einen Fahrer erzeugten Ist-Gesamtantriebsleistung mit einer aus der Elektrofahrrad-Geschwindigkeit berechnete Soll-Antriebsleistung durch. Bei einer Abweichung der Soll-Antriebsleistung von der Ist-Gesamtantriebsleistung wird auf eine Manipulation des Elektrofahrrad-Geschwindigkeits-Signals geschlossen, da nach dem Prinzip des Energieerhaltungssatzes eine derartige Abweichung bei einer ordnungsgemäßen Ausführung des Elektrofahrrades keinesfalls vorliegen kann.

Dabei gilt:

$$P_{in} = P_{out}$$

$$\tau\omega = mav + F_{loss}(v, \alpha)v$$

$$\tau\omega = mav + \left(\beta_o + \beta_1 v + c_{drag}v^2 + mg(\mu cos\alpha + sin\alpha)\right)v$$

Die Ist-Gesamtantriebsleistung ist entweder die Traktionsmotor-Antriebsleistung, die durch einen Fahrer eingebrachte Fahrer-Antriebsleistung oder eine Summe aus der Traktionsmotor-Antriebsleistung und der Fahrer-Antriebsleistung. Die Traktionsmotor-Antriebsleistung lässt sich durch die Motordrehzahl und das Motordrehmoment ermitteln, wobei die Motordrehzahl und das Motordrehmoment bereits aus der Ansteuerung des Traktionsmotors bekannt sind. Die Fahrer-Antriebsleistung kann durch einen Drehzahlsensor und einen Drehmomentsensor erfasst werden, welche insbesondere die Drehzahl und das Fahrer-Drehmoment an einer Tretwelle erfassen. Anderenfalls kann das Fahrer-Drehmoment auch abgeschätzt werden.

Die Soll-Antriebsleistung lässt sich durch die obenstehende Berechnungsformel berechnen, wobei in der Berechnungsformel unterschiedliche, während der Fahrt auftretenden Belastungen berücksichtigt werden. Dabei müssen unterschiedliche Größen ermittelt werden.

Die Elektrofahrrad-Geschwindigkeit wird durch einen Elektrofahrrad-Geschwindigkeits-Sensor ermittelt, wobei der Elektromotor-Geschwindigkeits-Sensor am Vorderrad oder am Hinterrad angeordnet ist. Der Elektromotor-Geschwindigkeits-Sensor ermittelt die Drehzahl des Vorderrades oder des Hinterrades, wobei aus der ermittelten Drehzahl und dem Raddurchmesser die Elektrofahrrad-Geschwindigkeit berechnet wird.

Durch einen Inklinations-Sensor und einen Anströmsensor, welche vorzugsweise an dem Elektrofahrrad angeordnet sind, können der Inklinationswinkel des Elektrofahrrades gegenüber einer terrestrischen Horizontalebene und eine Windgeschwindigkeit entgegen der Fahrtrichtung ermittelt werden. Mit diesen Parametern lässt dich der Windwiderstand, nämlich der Term $c_{drag}v^2$, und die Rollreibung sowie der Neigungswiderstand, nämlich der Term $mg(\mu cos\alpha + sin\alpha)$, ermitteln.

Die Kennwerte ß und ßo sind festgelegte Reibungsparameter, beispielsweise von Lagern und einem ggfs. vorhandenen Getriebe. Die Masse m kann eingeben, gemessen oder geschätzt werden. Die Beschleunigung a kann durch einen Beschleunigungssensor ermittelt werden.

Nach der Ermittlung der Ist-Gesamtantriebsleistung und der Soll-Antriebsleistung und dem Abgleich der beiden ermittelten Antriebsleistungen kann festgestellt werden, ob eine Abweichung und damit eine Manipulation des Elektrofahrrad-Geschwindigkeits-Signals des Geschwindigkeits-Sensors vorliegt.

Durch eine derartige Ausgestaltung kann auf eine einfache und kostengünstige Weise eine Manipulation des der Abregelung des Traktionsmotors zu Grund liegende Elektrofahrrad-Geschwindigkeits-Signals detektiert werden und eine entsprechende Maßnahme eingeleitet werden.

Vorzugsweise ist eine Aktivierungs-Einheit zur Aktivierung der Manipulationserkennungs-Einheit vorgesehen, wobei die Aktivierungs-Einheit ausschließlich im stationären Betrieb des Elektrofahrrades die Manipulationserkennungs-Einheit aktiviert. Die Aktivierungs-Einheit aktiviert die Manipulationserkennung nur dann, wenn das Elektrofahrrad sich mit einer konstanten Elektrofahrrad-Geschwindigkeit bewegt. Damit ist die Beschleunigung des Elektrofahrrades in Fahrtrichtung gleich null. Dadurch kann die Manipulation des Elektrofahrrad-Geschwindigkeits-Signals einfach ermittelt werden, da die sich sehr dynamisch ändernde und dadurch das Ergebnis verfälschende Beschleunigung zur Ermittlung der Soll-Antriebsleistung nicht berücksichtig werden muss.

In einer bevorzugten Ausgestaltung ist ein Elektrofahrrad-Beschleunigungs-Sensor vorgesehen, wobei die Aktivierungs-Einheit die Manipulationserkennungs-Einheit aktiviert, wenn eine Ist-Elektrofahrrad-Beschleunigung in Fahrtrichtung unterhalb eines vordefinierten, maximalen Beschleunigungsschwellenwerts liegt. Dadurch kann auf eine einfache Weise der stationäre Betrieb des Elektrofahrrades erkannt werden.

Vorzugsweise gleicht die Manipulationserkennungs-Einheit die Ist-Gesamtantriebsleitung und die Soll-Antriebsleistung über einen Manipulationserkennungszeitraum mit mehreren Erfassungszeitpunkten ab und summiert die Leistungs-Abweichungen zwischen der Ist-Gesamtantriebsleitung und der Soll-Antriebsleistung an den Erfassungszeitpunkten zu einer Gesamtabweichung auf, wobei die Manipulationserkennungs-Einheit ab einer Überschreitung eines Gesamtabweichungsschwellenwerts eine Manipulation des Elektrofahrrad-Geschwindigkeits-Signals festgestellt wird. Dadurch kann die Manipulation zuverlässig detektiert werden, wobei erst mehrere Leistungs-Abweichungen zu der Schlussfolgerung einer Manipulation führen. Eine falsch-detektierte Manipulation kann dadurch mit hoher Sicherheit ausgeschlossen werden.

In einer bevorzugten Ausgestaltung ist eine Elektrofahrrad-Bedieneinheit vorgesehen, wobei eine festgestellte Manipulation des Elektrofahrrad-Geschwindigkeits-Signals auf der Elektrofahrrad-Betätigungseinheit anzeigbar ist. Dadurch kann ein Elektrofahrrad mit einer unzulässigen Manipulation des Elektrofahrrad-Geschwindigkeits-Signals des Elektrofahrrad-Geschwindigkeits-Sensors einfach durch eine Betrachtung der Elektrofahrrad-Bedieneinheit durch eine Person erkannt werden und gegebenenfalls durch eine dafür befugte Person stillgelegt werden. Die Elektrofahrrad-Bedieneinheit kann ein Symbol oder einen anderen Hinweis aufweisen, welcher auf eine Manipulation hinweist.

Alternativ oder zusätzlich kann die Elektrofahrrad-Steuerung bei einer festgestellten Manipulation des Elektrofahrrad-Geschwindigkeits-Signals durch die Manipulationserkennungs-Einheit den Traktionsmotors abregeln. Das Elektrofahrrad kann nach einer Detektion der Manipulation nur noch mit einer reduzierten Unterstützung mittels des Traktionsmotors gefahren werden. Anderenfalls wird der Traktionsmotor vollständig abgeschaltet. Dadurch kann eine Verletzungsgefahr für den Fahrer und andere Personen aufgrund eines nicht zulässigen Betriebs des Elektrofahrrades reduziert werden.

Vorzugsweise ist zur Veränderung eines Drehzahlverhältnisses zwischen einer Ausgangsdrehzahl des elektrischen Traktionsmotors und einem Hinterrad oder einem Vorderrad eine Gangschaltung vorgesehen. Die Gangschaltung eines Elektrofahrrads weist insbesondere ein schaltbares Getriebe zwischen einer Tretwelle und dem Hinterrad und ein zugehöriges Schalt- und Bedienelementen auf. Die Gangschaltung dient dazu, dass die durch den Fahrer aufzubringende Trittfrequenz und das aufzubringende Fahrer-Drehmoment auch bei unterschiedlichen Fahrwiderständen in einem für den Fahrer angenehmen Bereich liegt. Dabei wird die Übersetzung zwischen der Tretwelle und dem Hinterrad entsprechend geändert. Dadurch, dass bei der Manipulationserkennung ausschließlich die Ist-Gesamtantriebsleistung und die Soll-Antriebsleistung betrachtet wird, kann die Manipulationserkennung auf eine einfache Weise und unabhängig von der Übersetzung der Gangschaltung festgestellt werden. Die Übersetzung der Gangschaltung muss in den Berechnungen der Ist-Gesamtantriebsleistung und der Soll-Antriebsleistung nicht berücksichtigt werden.

Die Aufgabe wird außerdem durch ein Verfahren zur Ermittlung einer Manipulation eines Elektrofahrrad-Geschwindigkeits-Signals des Elektrofahrrad-Geschwindigkeits-Sensor gelöst. Das Verfahren umfasst folgende Schritte:

- Ermittlung einer Ist-Gesamtantriebsleistung, wobei die Ist-Gesamtantriebsleistung aus der Motorleistung des Traktionsmotors und/oder einer durch einen Fahrer des Elektrofahrrades erzeugten Fahrerleistung gebildet wird,
- Ermittlung einer Elektrofahrrad-Geschwindigkeit mittels eines Elektrofahrrad-Geschwindigkeits-Sensors,
- Berechnung einer aus einer Elektrofahrrad-Geschwindigkeit berechnete Soll-Antriebsleistung,
- Abgleichen der Soll-Antriebsleistung von der Ist-Gesamtantriebsleistung und Ermittlung einer Abweichung zwischen der Soll-Antriebsleistung von der Ist-Gesamtantriebsleistung,
- Detektion einer Manipulation des Elektrofahrrad-Geschwindigkeits-Signals eines Elektrofahrrad-Geschwindigkeits-Sensors, wenn die Abweichung zwischen der Soll-Antriebsleistung von der Ist-Gesamtantriebsleistung einen vordefinierten Abweichungs-Schwellenwerts überschreitet.

Bei den Vorteilen des Verfahrens wird auf die vorhergehenden Absätze verwiesen.

Durch eine derartige Ausgestaltung des Elektrofahrrades kann auf eine einfache und kostengünstige Weise eine Manipulation des der Abregelung des Traktionsmotors zu Grund liegende Elektrofahrrad-Geschwindigkeits-Signals detektiert werden und eine entsprechende Maßnahme eingeleitet werden.

Ein Ausführungsbeispiel der Erfindung wird anhand der Zeichnungen näher erläutert.

Figur 1 zeigt eine schematische Darstellung eines Elektrofahrrades mit einem elektrischen Traktionsmotor zum Antrieb eines Hinterrades, und

Figur 2 zeigt eine schematische Darstellung des elektrischen Traktionsmotors aus der Figur 1 und einer Elektrofahrrad-Steuerung.

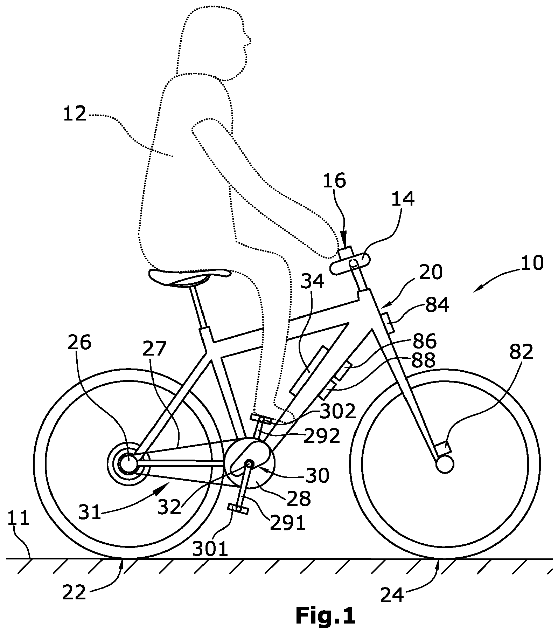

In der Figur 1 ist schematisch ein Elektrofahrrad 10 dargestellt, welches als Pedelec ausgeführt ist und von einem Fahrer 12 auf einer Fahrbahn 11 gefahren wird. Das Pedelec 10 weist einen Pedelec-Rahmen 20, ein Hinterrad 22 und ein Vorderrad 24 auf, wobei das Vorderrad 24 über einen Lenker 14 gelenkt werden kann. An dem Lenker 14 ist eine Elektrofahrrad-Bedieneinheit 16 befestigt, welche unter anderem der Einstellung eines Unterstützungsgrad durch den Fahrer 12, der Anzeige einer Elektrofahrrad-Geschwindigkeit oder ähnlichem dient.

An dem Pedelec-Rahmen 20 ist ein elektrischer Traktionsmotor 30 befestigt, welcher als Tretlagermotor ausgeführt ist. Der elektrische Traktionsmotor 30 weist eine drehbar gelagerte Tretwelle 32 auf, die an ihren beiden Längsenden jeweils eine Tretkurbel 291, 292 aufweist, an deren freien Enden jeweils ein Pedal 301, 302 drehbar angebracht ist. Die Antriebseinheit 30 ist über ein Abtriebs-Kettenblatt 28 und eine Antriebskette 27 mit einer Hinterrad-Ritzelkassette 26 drehmomentübertragend verbunden, wodurch die mechanische Antriebsleistung von dem elektrischen Traktionsmotor 30 auf die Hinterrad-Ritzelkassette 26 übertragen wird. Das Abtriebs-Kettenblatt 28, die Antriebskette 27, die Hinterrad-Ritzelkassette 26 sowie in der Figur 1 nicht gezeigte am Hinterrad-Ritzelkassette 26 angeordnete Schalteinheit und eine am Lenker 14 befestigte Schaltbetätigungseinheit bilden gemeinsam eine Gangschaltung 31, wobei in Abhängigkeit vom gewählten Ritzel der Hinterrad-Ritzelkassette 26 die Übersetzung zwischen dem Abtriebs-Kettenblatt 28, d.h. der Tretwelle 32, und dem Hinterrad 22 variiert. Weiterhin ist am Pedelec-Rahmen 20 ein Traktionsakkumulator 34 befestig, welcher den elektrischen Traktionsmotor 30 mit elektrischer Antriebsenergie versorgt.

Am Vorderrad 24 ist ein Elektrofahrrad-Geschwindigkeits-Sensor 82 angeordnet, welcher die momentane Elektrofahrrad-Geschwindigkeit erfasst und an eine Elektrofahrrad-Steuerung 50 übermittelt. Am Pedelec-Rahmen 20 ist außerdem ein Anströmsensor 84 zur Ermittlung einer Luftgeschwindigkeit, ein Elektrofahrrad-Beschleunigungs-Sensor 86 zur Ermittlung der Beschleunigung in Fahrtrichtung des Elektrofahrrads 10 und ein Inklinations-Sensor 88 zur Erfassung der Neigung der Fahrbahn 11 angeordnet.

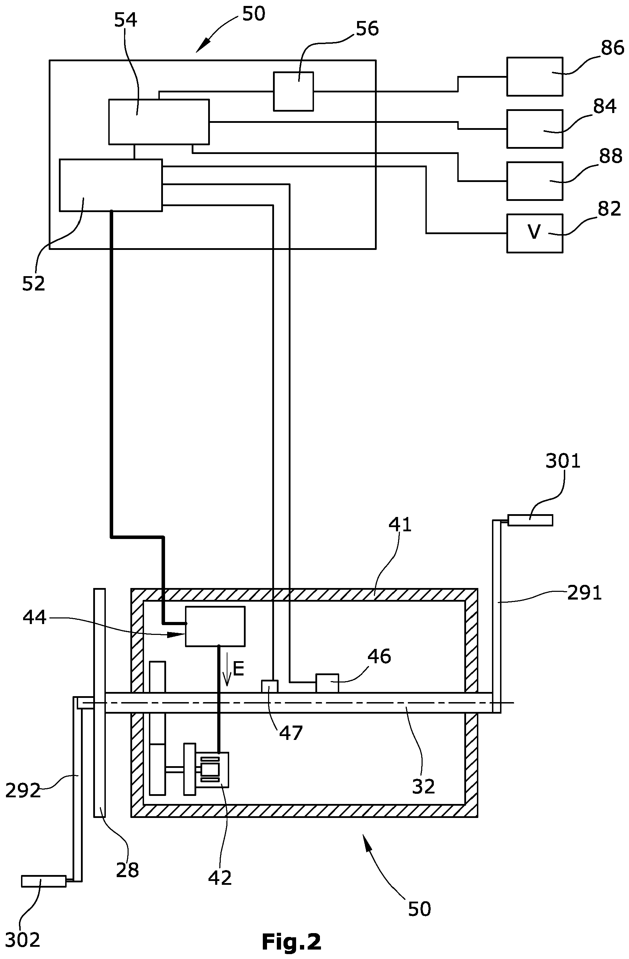

Die Figur 2 zeigt den elektrischen Traktionsmotor 30 und die Elektrofahrrad-Steuerung 50. Der elektrische Traktionsmotor 30 weist ein im Wesentlichen geschlossenes Traktionsmotor-Gehäuse 41 auf, in dem die Tretwelle 32 drehbar gelagert ist. In dem Traktionsmotor-Gehäuse 41 ist ein die Tretwelle 32 antreibender Elektromotor 42, ein Getriebe 43 und eine in Abhängigkeit entsprechender Steuersignale die elektrische Antriebsenergie für den Elektromotor 42 zur Verfügung stellende Leistungselektronik 44 angeordnet. Weiterhin ist in dem Traktionsmotor 30 ein Tretwellen-Drehzahlsensor 46 und ein Drehmomentsensor 47 angeordnet, wobei der Drehmomentsensor 47 das durch den Fahrer 12 in die Tretwelle 32 eingeleitete Fahrer-Drehmoment ermittelt und der Tretwellen-Drehzahlsensor 46 die Fahrertrittfrequenz, d.h. die Fahrerdrehzahl, ermittelt.

Die Elektrofahrrad-Steuerung 50 weist eine Motorsteuerung 52 auf, deren Ausgangssignale die Antriebsmotor-Leistungselektronik 44 unmittelbar ansteuern. Die Motorsteuerung 52 ist mit dem Tretwellen-Drehzahlsensor 46, dem Drehmomentsensor 47 und dem Elektrofahrrad-Geschwindigkeits-Sensor 82 signaltechnisch verbunden, wobei in der Motorsteuerung 52 eine Unterstützungsfunktion hinterlegt ist. Basierend auf der Unterstützungsfunktion bestimmt sich die Höhe der Unterstützung durch den Traktionsmotor 30.

Die Motorsteuerung 52 ist derart ausgeführt, dass bei einer maximalen Elektrofahrrad-Geschwindigkeit, welche von dem Elektrofahrrad-Geschwindigkeit-Sensor 82 erfasst wird und an die Elektrofahrrad-Steuerung 50 übergeben wird, der elektrische Traktionsmotor 30 abgeregelt wird. Unter Abregeln wird dabei verstanden, dass der elektrische Traktionsmotor 30 nicht mehr mit elektrischer Antriebsenergie versorgt wird oder zumindest die elektrische Antriebsenergie reduziert wird. Beispielsweise kann die elektrische Antriebsenergie derart reduziert werden, dass nur noch bis zu einer sehr geringen Elektrofahrrad-Geschwindigkeit eine Unterstützung stattfinden, d.h. ein Notlauf aktiviert wird.

Um die Abregelung des elektrischen Traktionsmotors 30 gesetzeswidrig zu unterbinden, wird das Elektrofahrrad-Geschwindigkeits-Signal des Elektrofahrrad-Geschwindigkeits-Sensors 82 manipuliert, indem eine Einheit zwischen der Elektrofahrrad-Steuerung 50 und dem Elektrofahrrad-Geschwindigkeits-Sensor 82 zwischengeschaltet wird, welche das Elektrofahrrad-Geschwindigkeits-Signal derart verändert, dass die Abregelung des elektrischen Traktionsmotors 30 erst bei einer höheren tatsächlichen Elektrofahrrad-Geschwindigkeit erfolgt. Um eine derartige Manipulation des Elektrofahrrad-Geschwindigkeits-Signals zu verhindern, weist die Elektrofahrrad-Steuerung 50 eine Manipulationserkennungs-Einheit 54 auf.

Die Manipulationserkennung des Elektrofahrrad-Geschwindigkeits-Signals des Elektrofahrrad-Geschwindigkeits-Sensors 82 erfolgt ausschließlich im stationären Zustand des Elektrofahrrades 10, d.h. bei einer konstanten Elektrofahrrad-Geschwindigkeit. Hierfür weist die Elektrofahrrad-Steuerung 50 eine Aktivierungs-Einheit 56 auf, welche mit dem Elektrofahrrad-Beschleunigungs-Sensor 86 verbunden ist. Wenn die durch den Elektrofahrrad-Beschleunigungs-Sensor 86 erfasste Beschleunigung des Elektrofahrrades 10 in Fahrtrichtung gleich null ist wird die Manipulationserkennungs-Einheit 54 aktiviert.

Erfindungsgemäß gleicht die Manipulationserkennungs-Einheit 54 eine durch den Traktionsmotor 30 und durch einen Fahrer 12 erzeugte Ist-Gesamtantriebsleistung mit einer aus der Elektrofahrrad-Geschwindigkeit berechnete Soll-Antriebsleistung ab und stellt bei einer Abweichung der Soll-Antriebsleistung von der Ist-Gesamtantriebsleistung eine Manipulation des Elektrofahrrad-Geschwindigkeits-Signals fest. Dabei gleicht die Manipulationserkennungs-Einheit 54 die Ist-Gesamtantriebsleitung und die Soll-Antriebsleistung über einen Manipulationserkennungszeitraum mit mehreren Erfassungszeitpunkten ab, wobei die Leistungs-Abweichungen zwischen der Ist-Gesamtantriebsleitung und der Soll-Antriebsleistung an den Erfassungszeitpunkten zu einer Gesamtabweichung aufsummiert werden. Wenn die aufsummierte Gesamtabweichung einen vordefinierten Gesamtabweichungsschwellenwert übersteigt, liegt eine Manipulation des Elektrofahrrad-Geschwindigkeits-Signals vor. Basierend darauf werden entsprechende Maßnahme, insbesondere ein Anzeigen der Manipulation auf der Elektrofahrrad-Bedieneinheit 16 oder ein Abschalten des Traktionsmotors 30, eingeleitet.

Um die Ist-Gesamtantriebsleistung zu bestimmen, werden die Traktionsmotor-Antriebsleistung und die Fahrer-Antriebsleistung aufsummiert. Die Traktionsmotor-Antriebsleistung lässt sich durch die Motordrehzahl und das Motordrehmoment ermitteln, wobei die Motordrehzahl und das Motordrehmoment bekannt sind. Die Fahrer-Antriebsleistung wird durch den Tretwellen-Drehzahlsensor 46 und den Drehmomentsensor 47 ermittelt.

Die Soll-Antriebsleistung lässt sich durch die untenstehende Berechnungsformel berechnen, wobei in der Berechnungsformel unterschiedliche, während der Fahrt auftretenden Belastungen berücksichtigt werden.

$$P_{out} = \left( \beta_o + \beta_1 v + c_{drag} v^2 + mg(\mu cos\alpha + sin\alpha) \right) v$$

Um die Soll-Antriebsleistung zu berechnen, müssen mehrere Größen ermittelt werden. Dabei wird die Elektrofahrrad-Geschwindigkeit v durch den Elektrofahrrad-Geschwindigkeits-Sensor 82 ermittelt, wobei das Elektrofahrrad-Geschwindigkeits-Signal von der Motorsteuerung 52 an die Manipulationserkennungs-Einheit 54 weitergegeben wird.

Durch den Inklinations-Sensor 88 und den Anströmsensor 84, welche mit der Manipulationserkennungs-Einheit 54 signalmäßig verbunden sind, werden der Inklinationswinkel des Elektrofahrrades 10 gegenüber einer terrestrischen Horizontalebene und eine Windgeschwindigkeit entgegen der Fahrtrichtung ermittelt. Mit diesen Parametern lässt dich der Windwiderstand, nämlich der Term $c_{drag} v^2$, und die Rollreibung sowie der Neigungswiderstand, nämlich der Term $mg(\mu cos\alpha + sin\alpha)$, ermitteln.

Die Kennwerte b und b0 sind festgelegte Reibungsparameter, beispielsweise von Lagern und dem Getriebe. Die Masse m kann eingeben, gemessen oder geschätzt werden.

Durch eine derartige Ausgestaltung kann auf eine einfache und kostengünstige Weise eine Manipulation des der Abregelung des Traktionsmotors 30 zu Grund liegende Elektrofahrrad-Geschwindigkeits-Signals detektiert werden und eine entsprechende Maßnahme eingeleitet werden.

Es sollte deutlich sein, dass auch andere konstruktive Ausführungsformen des Elektrofahrrades 10 im Vergleich zur beschriebenen Ausführungsform möglich sind, ohne den Schutzbereich des Hauptanspruchs zu verlassen.

**Patentansprüche**

**1.** Elektrofahrrad mit

einem Vorderrad (24),

einem Hinterrad (22),

einem elektrischen Traktionsmotor (30), welcher das Vorderrad (24) oder das Hinterrad (22) antreibt,

einem Traktionsakkumulator (34) zur Versorgung des Traktionsmotors (30) mit elektrischer Energie,

einem Elektrofahrrad-Geschwindigkeits-Sensor (82) zur Ermittlung der aktuellen Elektrofahrrad-Geschwindigkeit,

einer Elektrofahrrad-Steuerung (50) zur Ansteuerung des Traktionsmotors (30), wobei die Elektrofahrrad-Steuerung (50) den Traktionsmotor (30) bei einer maximalen Elektrofahrrad-Geschwindigkeit abregelt, und

einer Manipulationserkennungs-Einheit (54) zur Erkennung einer Manipulation eines Elektrofahrrad-Geschwindigkeits-Signals des Elektrofahrrad-Geschwindigkeits-Sensor (82), wobei die Manipulationserkennungs-Einheit (54) eine durch den Traktionsmotor (30) und/oder durch einen Fahrer erzeugte Ist-Gesamtantriebsleistung mit einer aus der Elektrofahrrad-Geschwindigkeit berechnete Soll-Antriebsleistung abgleicht und bei einer Abweichung der Soll-Antriebsleistung von der Ist-Gesamtantriebsleistung eine Manipulation des Elektrofahrrad-Geschwindigkeits-Signals feststellt.

2. Elektrofahrrad nach Anspruch 1,
**dadurch gekennzeichnet, dass**
eine Aktivierungs-Einheit (56) zur Aktivierung der Manipulationserkennungs-Einheit (54) vorgesehen ist, wobei die Aktivierungs-Einheit (56) ausschließlich im stationären Betrieb des Elektrofahrrades (10) die Manipulationserkennungs-Einheit (54) aktiviert.

3. Elektrofahrrad nach Anspruch 2,
**dadurch gekennzeichnet, dass**
ein Elektrofahrrad-Beschleunigungs-Sensor (86) vorgesehen ist, wobei die Aktivierungs-Einheit (56) die Manipulationserkennungs-Einheit (54) aktiviert, wenn die Ist-ElektrofahrradBeschleunigung in Fahrtrichtung einen vordefinierten, maximalen Beschleunigungsschwellenwert unterschreitet.

4. Elektrofahrrad nach einem der vorhergehenden Ansprüche,
**dadurch gekennzeichnet, dass**
die Manipulationserkennungs-Einheit (54) die Ist-Gesamtantriebsleitung und die Soll-Antriebsleistung über einen Manipulationserkennungszeitraum mit mehreren Erfassungszeitpunkten abgleicht und die Leistungs-Abweichungen zwischen der Ist-Antriebsleitung und der Soll-Antriebsleistung an den Erfassungszeitpunkten zu einer Gesamtabweichung aufsummiert, wobei die Manipulationserkennungs-Einheit (54) ab einer Überschreitung eines Gesamtabweichungsschwellenwerts eine Manipulation des Elektrofahrrad-Geschwindigkeits-Signals feststellt.

5. Elektrofahrrad nach einem der vorhergehenden Ansprüche,
**dadurch gekennzeichnet, dass**
eine Elektrofahrrad-Bedieneinheit (16) vorgesehen ist, wobei eine festgestellte Manipulation des Elektrofahrrad-Geschwindigkeits-Signals auf der Elektrofahrrad-Betätigungseinheit (28) anzeigbar ist.

6. Elektrofahrrad nach einem der vorhergehenden Ansprüche,
**dadurch gekennzeichnet, dass**
die Elektrofahrrad-Steuerung (50) bei einer festgestellten Manipulation des Elektrofahrrad-Geschwindigkeits-Signals den Traktionsmotors (30) abregelt.

7. Elektrofahrrad nach einem der vorhergehenden Ansprüche,
**dadurch gekennzeichnet, dass**
zur Veränderung eines Drehzahlverhältnisses zwischen einer Ausgangsdrehzahl des elektrischen Traktionsmotors (30) und einem Hinterrad (22) oder einem Vorderrad (24) eine Gangschaltung (31) vorgesehen ist.

8. Elektrofahrrad nach einem der vorhergehenden Ansprüche,
**dadurch gekennzeichnet, dass**
ein Inklinations-Sensor (88) zur Erfassung einer Steigung der Fahrbahn (11) vorgesehen ist.

9. Elektrofahrrad nach einem der vorhergehenden Ansprüche,
**dadurch gekennzeichnet, dass**
ein Anströmsensor (84) zur Erfassung einer Geschwindigkeit des Gegenwinds vorgesehen ist.

10. Verfahren zur Ermittlung einer Manipulation eines Elektrofahrrad-Geschwindigkeits-Signals des Elektrofahrrad-Geschwindigkeits-Sensor (82), mit folgenden Schritten:

- Ermittlung einer Ist-Gesamtantriebsleistung, wobei die Ist-Gesamtantriebsleistung aus der Motorleistung des Traktionsmotors (30) und/oder einer durch einen Fahrer des Elektrofahrrades (10) erzeugten Fahrerleistung gebildet wird,
- Ermittlung einer Elektrofahrrad-Geschwindigkeit mittels eines Elektrofahrrad-Geschwindigkeits-Sensor (82),
- Berechnung einer Soll-Antriebsleistung basierend auf der ermittelten Elektrofahrrad-Geschwindigkeit,
- Abgleichen der Soll-Antriebsleistung mit der Ist-Gesamtantriebsleistung,
- Detektion einer Manipulation des Elektrofahrrad-Geschwindigkeits-Signals eines Elektrofahrrad-Geschwindigkeits-Sensors (82), wenn die Abweichung zwischen der Soll-Antriebsleistung von der Ist-Gesamtantriebsleistung einen vordefinierten Abweichungs-Schwellenwerts überschreitet.

**Fig.1**

**Fig.2**

Europäisches
Patentamt

European
Patent Office

Office européen
des brevets

**EUROPÄISCHER RECHERCHENBERICHT**

**Nummer der Anmeldung**

EP 21 15 3470

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2019 115312 B3 (TQ SYSTEMS GMBH [DE]) 5. November 2020 (2020-11-05) * das ganze Dokument * ----- | 1-10 | INV. B62M6/45 B62M6/55 |
| A,D | DE 10 2014 212760 A1 (BOSCH GMBH ROBERT [DE]) 19. März 2015 (2015-03-19) * das ganze Dokument * ----- | 1-10 | |

**RECHERCHIERTE SACHGEBIETE (IPC)**

B62M

Der vorliegende Recherchenbericht wurde für alle Patentansprüche erstellt

| Recherchenort | Abschlußdatum der Recherche | Prüfer |
|---|---|---|
| Den Haag | 11. Juni 2021 | Baeza Félez, Lluîs |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 21 15 3470

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-2021

| Im Recherchenbericht angeführtes Patentdokument | Datum der Veröffentlichung | Mitglied(er) der Patentfamilie | Datum der Veröffentlichung |
|---|---|---|---|
| DE 102019115312 B3 | 05-11-2020 | KEINE | |
| DE 102014212760 A1 | 19-03-2015 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014212760 A1